# EUROPEAN PATENT APPLICATION

(11) **EP 4 201 371 A1**
(43) Date of publication of application: **28.06.2023**
(21) Application number: 21217428.8
(22) Date of filing: 23.12.2021
(51) Int. Cl.: A61C 9/00, A61C 17/16, A61C 19/04

(54) **PERSONAL CARE DEVICES**

(71) Applicant: Koninklijke Philips N.V., 5656 AG Eindhoven (NL)
(72) Inventor: VAN DEN DUNGEN, Wilhelmus Andreas Marinus Arnoldus Maria, Eindhoven (NL); JOHNSON, Mark Thomas, Eindhoven (NL); PERRONE, Antonio Luigi, Eindhoven (NL)
(74) Representative: Philips Intellectual Property & Standards

(57) **Abstract**

Proposed are schemes, solutions, concepts, designs, methods and systems pertaining to aiding and/or improving image acquisition from a vibratory personal care device having an image capture device. Embodiments propose determining a timing of a target part of the vibration cycle in relation to the master clock signal; extracting image data from captured images from the image capture device based on the determined timing of the target part of the vibration cycle; and generating a reconstruction image from the extracted image data. In this way, improved images may be obtained from a vibratory personal care device.

## Description

### FIELD OF THE INVENTION

The present invention relates to the field of personal care devices, and in particular to the field of personal care devices that capture digital impressions of one or more features of a user.

### BACKGROUND OF THE INVENTION

It is known to provide personal care devices with the ability or functionality to capture digital impressions (e.g. images) of a feature or part of a user during use. For example, Intra-Oral Scanner (IOS) devices use projected light (e.g. laser or structured light) and an image sensor to capture images of the dentogingival tissues. These images can be processed to create a three-dimensional (3D) model of the scanned surface. Data provided by IOS can therefore be useful for oral care, including the detection of common dental pathologies such as caries, tooth discoloration, misalignment. Also, it may be advantageous to capture and compare repeated IOS images, to enable identification of changes in dentogingival tissues over time for example.

Because personal care devices, such as electric brushing or shaving devices, are used on a regular (e.g. daily) basis, they may provide a suitable vehicle to regularly capture images of a part of a user. Accordingly, there is trend to integrate cameras or imaging sensors into personal care device, such as toothbrushes for example. However, because a main usage characteristic of such a personal care device may be its vibration or cyclical/periodic movement, images acquired by an image capture device integrated with a personal care device are typically distorted and/or blurred by the movement/vibration of the device.

Although image stabilization techniques are known for portable handheld devices (e.g. smart phone, digital photo cameras, etc.), such techniques are only designed and optimized for low frequency (e.g. <10 Hz), erratic (e.g. non-periodic, random, etc.) user-induced motions. Because a personal care device (such as an electric toothbrush) typically moves or vibrates at a much higher periodic frequency (e.g. >20-300 Hz), there remains a need to stabilize the image capture process and/or make the image acquisition process robust to device movements/vibrations generated by a personal care device.

### SUMMARY OF THE INVENTION

The invention is defined by the claims.

According to examples in accordance with an aspect of the invention, there is provided a method of processing captured images from a personal care device, wherein the personal care device comprises: an image capture device adapted, in use, to capture images of one or more features of a user; and vibratory means adapted to vibrate the personal care device so that, in use, the personal care device vibrates with a vibration cycle having a vibration frequency based on a master clock signal of the personal care device, and wherein the method comprises:
determining a timing of a target part of the vibration cycle based on the master clock signal;
extracting image data from captured images from the image capture device based on the determined timing of the target part of the vibration cycle; and
generating a reconstruction image from the extracted image data.

Proposed concepts thus aim to provide schemes, solutions, concepts, designs, methods and systems pertaining to aiding and/or improving image acquisition from a vibratory personal care device having an image capture device the image of which is influenced by the device vibration. This may either be a camera fixed rigidly to the vibrating device which may then vibrate with the device. Alternatively, the camera sensor itself may be situated in a stationary part of a device (e.g. a brush handle) whilst the optical system of the device (like an optical fiber, the imaging lens of the optical system) are subject to the device vibrations. In particular, embodiments of the invention propose identifying a target part (e.g. low velocity/motion part) of the vibration cycle based on clock signal of the personal care device, and then controlling the extraction of image data based on the identified target part of the vibration cycle. Using the extracted image data, an image of improved quality may then be constructed. In this way, improved images may be obtained from a camera having an optical path that passes through a vibratory portion of a vibratory personal care device.

In particular, it is proposed to determine the target part of the vibration cycle based on the master clock signal (e.g. crystal time base) of the personal care device. By way of example, vibration of the personal care device is typically controlled with a specific timing as determined by a main controller that operates according to a master clock signal (e.g. a crystal oscillator circuit feeding the main processor). A relation between the vibration cycle and the master clock signal may thus be identified and then used to determine (e.g. calculate) a period/portion of the vibration cycle which exhibits low/zero motion of the personal care device. The target part of the vibration cycle may then, for example, be determined according to the timing of such periods of low velocity of the personal care device (e.g. periods of directional/angle change).

In particular, it has been realized that a relationship between the timing of captured images and the vibration cycle may be identified. Based on this relationship, embodiments may determine the location of a target region of image data (within a captured image) that was captured during period/portion of the vibration cycle which exhibits low/zero motion of the personal care device. For instance, if one knows the time an image was captured, one can calculate where the regions of image data captured during the low speed periods (i.e. still moments) are. That is, a target region of a captured image which comprises high quality (i.e. sharp, blur-free) image data may be identified based on the timing of the captured image and the vibration cycle.

Furthermore, based on the relationship between the timing of captured images and the vibration cycle, a change in the position of the target region across sequentially-captured images may be determined, thus enabling prediction of the location of the target region in each of the sequentially-captured images. In this way, data acquisition may be controlled to lock onto such target sections comprising high-quality image data (captured during a low motion portion of the vibration cycle), thus facilitating the extraction/retrieval of sections of high-quality image data from a plurality of captured images, and subsequent construction of a single high-quality image from the extracted/retrieved sections.

In other words, embodiments propose to adapt image data selection/extraction based on a timing determined according to a relationship between the timing of captured images and master clock signal of the personal care device, so as to provide images of improved quality and/or enable the use of simpler/cheaper image capturing devices. Embodiments may therefore facilitate stable and high-quality image generation during tooth brushing. Such embodiments may be particularly relevant to teledentistry propositions, for example, by enabling improved imaging of a user's tooth, gum, tongue, etc. For instance, images obtained by proposed embodiments may aid dental care treatments and/or decision making. Accordingly, embodiments may be used in relation to dental treatment selection so as support a dental care professional when selecting treatment for a subject.

Further, embodiments may facilitate image-based diagnostics, superior location sensing, therapy planning (e.g. orthodontics, aligners) and/or dental treatment monitoring.

By being integrated into the normal brushing regimen of a user (instead of using separate devices such as smart phones, dental endo-scopes or handheld intraoral scanners), embodiments may support improved dental care. Improved image-based dental care may therefore be provided by proposed concepts.

Embodiments may therefore provide the advantage that decision making in selecting an oral care treatment can be improved through the use of images captured by a vibratory personal care device. For example, embodiments may enable a larger number of oral care treatment options to be available (e.g. through the provision of more and/or improved information about a subject's oral health).

In some embodiments, extracting image data may comprise: determining a relationship between the timing of captured images and the determined timing of the target part of the vibration cycle; and, based on the determined relationship, for each captured image from the image capture device, identifying a target region of the captured image captured during the target part of the vibration cycle and extracting image data from the identified target region. Further, the step of identifying a target region of the captured image may comprise predicting the target region based on the location of a target region in a preceding captured and the determined relationship. That is, a time between two target parts of the vibration cycle may be identified and used to predict or calculate the location of target regions in subsequent captured images. In this way, embodiments may predict the location a target region of a captured image (where image data was captured during a low speed period or 'still moment' in the vibration cycle).

It has been realized that as a vibratory portion of the personal care device changes direction/angle, a period of low or no speed/motion/velocity is present, causing areas of captured images to be clearer and sharper. By identifying these periods and their frequency of occurrence, a relationship between the timing of captured images and the determined timing of the target part of the vibration cycle may be leveraged to identify their location in a series of captured images. Image data extraction from captured images may then be adapted to 'lock on' (i.e. synchronize) to these repeating periods of low speed or low motion across the series of images. Image data acquired from the periods of low motion can then be used to construct a high quality image (in terms of reduced blur and/or distortion), thus facilitating improved oral/dental care decision making.

The image capture device may, for example, comprise a rolling shutter camera. For such embodiments, the timing of the captured images may be determined based on a frame capture rate of the rolling shutter camera. Embodiments may thus cater for the use of a low-cost free-running rolling shutter camera, and the frame capture rate of the rolling shutter camera may be independent of the master clock signal. That is rolling shutter camera may operate at a different frequency from the vibration frequency of the personal care device, i.e. not be synchronized with the vibration cycle. Some embodiments may further comprise adjusting the vibration frequency of the personal care device based on the determined timing of the target part of the vibration cycle and the timing of captured images. For example, adjusting the vibration frequency may comprise: determining a target vibration frequency based on a capture rate of the image capture device; and controlling the vibratory means to cause the personal care device to vibrate at the target vibration frequency. In this way, the vibration frequency may be adjusted to a preferred value that causes the timing of the target part of the vibration cycle to be more preferable. For instance, determining the target vibration frequency may comprise identifying a vibration frequency such that a first region of a first captured image from the image capture device captured during the target part of the vibration cycle is different from a second region of a second, subsequent captured image from the image capture device captured during the target part of the vibration cycle. This may help to ensure that the target part of the vibration cycle corresponds to different regions of different captured images, thereby helping to provide useful data from each captured images and minimize image reconstruction time.

Embodiments may therefore be particularly useful in combination with free running image capture devices.

Some embodiments may comprise adjusting the capture rate of the image capture device based on the determined timing of the target part of the vibration cycle. This may, for example, provide a further tool for adjusting data acquisition from captured images to preferred timings. However, in practice, adjustment of the capture rate of the image capture device may not be feasible/viable due to limitations of the image capture device for example. Catering for adjustment of the vibration frequency of the personal care device may therefore be of considerable practical benefit.

It is also proposed that the timing of the target part of the vibration cycle may also be determined based on one or more sensed operating parameters of the personal care device. Thus, some embodiments may further comprise: sensing an operating parameter of the personal care device. Determining the timing of the target part of the vibration cycle may then be further based on the sensed operating parameter.

By way of example, the vibratory means may comprise a vibrator, and an embodiment may include sensing a drive signal of the vibrator. The target part of the vibration cycle may then be determined based on a time period when then sensed drive signal meets a predetermined drive signal requirement. For instance, the sensed drive signal may be representative of a drive current or voltage of the vibrator, and the predetermined drive signal requirement may be that the magnitude of the drive current or voltage crosses a threshold value. For example the drive current may exceed a threshold, the drive voltage may fall below a threshold, etc. In this way, sensing of the drive signal may be employed to determine the target part of the vibration cycle (e.g. identify the timing of a low velocity period within the vibration cycle). Simple voltage or current monitoring techniques may therefore be employed to accurately identify the timing(s) of low velocity of the personal care device.

In some embodiments, an angular velocity of a part of the personal care device may be sensed. The target part of the vibration cycle may then be determined further based on a time period when then sensed angular velocity meets a predetermined velocity requirement. For instance, the predetermined velocity requirement may be that the magnitude of the sensed angular velocity does not exceed a velocity threshold value. Thus, movement/motion sensing concepts may be employed to determine the target part of the vibration cycle (e.g. identify the timing of a low velocity period within the vibration cycle). Simple movement sensing techniques and/or apparatus may therefore be employed to accurately identify the timing(s) of low velocity of the personal care device.

In another embodiment, the target part of the vibration cycle may be determined further based on information from a hall sensor that is adapted to sense a magnetic field at a part of the personal care device. For instance, the target part of the vibration cycle may be determined based on a time period when then sensed magnetic field meets a predetermined magnetic field requirement. Sensing of the magnetic field may thus be employed to determine the target part of the vibration cycle (e.g. identify the timing of a low velocity period within the vibration cycle). Existing hall sensors that are already integrated within conventional personal care devices may therefore be leveraged to provide new and/or extended functionality, for example.

In other embodiments, an acceleration or excursion of a vibration of a part of the personal care device may be sensed. The target part of the vibration cycle may then be determined based on a time period when the magnitude of the sensed vibration meets a predetermined vibration requirement. For instance, the predetermined vibration requirement may be that the acceleration or excursion of a vibration exceeds a vibration threshold value. Similarly the low speed is usually associated with the extremities of the motion, whereby the predetermined vibration requirement may be that the excursion of the sensed vibration exceeds a vibration threshold value. Thus, vibration sensing concepts/apparatus may be employed to determine the target part of the vibration cycle (e.g. identify the timing of a low velocity period within the vibration cycle). Existing and/or simple vibration sensing techniques and/or apparatus may therefore be employed to accurately identify the timing(s) of low velocity of the personal care device.

Whilst the above is also relevant for a vibration sensor adapted to sense an acceleration or excursion positioned on a vibrating part (e.g. brush head) it is clearly possible that the sensor is positioned in a handle of the device. This may result in a more complex motion of the vibration sensor. However in this case also determining the low velocity periods will be possible using other predetermined requirements of the acceleration and/or excursion, which whilst complex will in general remain periodic in nature.

According to yet another aspect of the invention, there is provided a computer program comprising computer program code means which is adapted, when said computer program is run on a computer, to implement a method according to proposed embodiment.

Thus, there may also be provided a computer system comprising: a computer program product according to proposed embodiment; and one or more processors adapted to perform a method according to a proposed concept by execution of the computer-readable program code of said computer program product.

According to another aspect of the invention, there is provided a system for processing captured images from a personal care device, wherein the personal care device comprises: an image capture device adapted, in use, to capture images of one or more features of a user; and vibratory means adapted to vibrate the personal care device so that, in use, the personal care device vibrates with a vibration cycle having a vibration frequency based on a master clock signal of the oral care device. The system comprises:
a processor arrangement configured to determine a timing of a target part of the vibration cycle based on the master clock signal; and
an image processor configured to extract image data from captured images from the image capture device based on the determined timing of the target part of the vibration cycle and to generate a reconstruction image from the extracted image data.

Such a system may be provided as a standalone system for use with one or more personal care devices. Thus, a system according to an embodiment may be employed with a conventional vibratory personal care device to provided improved and/or extended functionality. According to another aspect of the invention, there is provided a personal care device comprising:
vibratory means adapted to vibrate the personal care device so that, in use, the oral device vibrates with a vibration cycle having a vibration frequency based on a master clock signal of the personal care device;
an image capture device adapted, in use, to capture images of one or more features of a user; and
a system for processing captured images according to an embodiment.

The personal care device may comprise a toothbrush, and may preferably comprise an electric toothbrush that is adapted to vibrate in use. In other embodiments, the personal care device may comprise a mouthpiece, shaver, or skin cleansing device that is adapted to vibrate in use. One or more proposed concept(s) may therefore be employed in a range of different personal care devices. Embodiments may therefore have wide application in the field of personal care devices (and image capture and/or processing concepts for images captured by vibratory personal care devices).

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a simplified schematic block diagram of an electric toothbrush according to a proposed embodiment;
Figure 2 is a graph showing an exemplary variation in angle θ (of displacement) and angular velocity of the brush head of Figure 1 over time as the brush head vibrates, wherein the variation in displacement angle θ of the brush head is depicted by the solid line, and wherein the variation in angular velocity v of the brush head is depicted by the dashed line;
Figure 3 is a simplified schematic block diagram of a mouthpiece according to a proposed embodiment;
Figure 4A illustrates extracting image data from captured images according to proposed embodiment;
Figure 4B depicts the use of the extracted image data from Figure 4A to construct an improved (e.g. high quality) image according to an embodiment;
Figure 5 is a flow diagram of a method of processing captured images from a personal care device according to a proposed embodiment; and
Figure 6 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding and/or improving image acquisition from a vibratory personal care device having an image capture device. In particular, embodiments may provide a system, device and/or method which identifies a target part of the vibration cycle based on a master clock signal of the personal care device. Control of the extraction of image data from captured images is then undertaken according to the identified target part of the vibration cycle. Through such control of the image data acquisition, improved images (e.g. images exhibiting less blur and/or distortion) may be obtained.

In particular, it has been realized that one or more parts of the vibration cycle may be better suited to image capture, for example due to exhibiting reduced motion/movement. It has also been realized that the timing(s) of such a part of the vibration cycle preferred (or optimal) for image capture may be determined based on the master clock signal of the device.

Furthermore, it is proposed that a relationship between a timing of captured images and the vibration cycle (which is, in turn, based on the master clock signal) may be identified. Based on this relationship, embodiments may determine the location of a target region of image data (within a captured image) that was captured during period/portion of the vibration cycle which exhibits low/zero motion of the personal care device (and hence the image capture device provided thereon/therein). That is, a target region of a captured image which comprises high quality (i.e. sharp, blur-free) image data may be identified. Furthermore, based on the relationship between the timing of captured images (e.g. timing of frames captured by a rolling shutter camera) and the vibration cycle, a variation (e.g. drift or shift) in the position of the target region across sequentially-captured images may be determined, thus enabling prediction of the location of the target region in each of the sequentially-captured images. In this way, data acquisition may be controlled to lock onto target sections comprising high-quality image data (captured during a low motion portion of the vibration cycle), thus facilitating the extraction/retrieval of target sections of high-quality image data from a plurality of captured images. These extracted/retrieved sections may then be used to construct a single high-quality image.

Simple detection of an operation parameter of the personal care device to determine a preferred, optimal or target timings of image data acquisition from captured images may therefore be employed, thus enabling the provision of improved or optimized images.

In other words, embodiments propose to adapt image data extraction to a relationship between the vibration of the personal care device and the timing of captured images, so as to provide images of improved quality.

Embodiments may therefore facilitate stable and high-quality image acquisition during tooth brushing. Such embodiments may be particularly relevant to teledentistry propositions, for example, by enabling improved imaging of a user's tooth, gum, tongue, etc. For instance, images obtained by proposed embodiments may aid dental care treatments and/or decision making. Accordingly, embodiments may be used in relation to dental treatment selection so as support a dental care professional when selecting treatment for a subject.

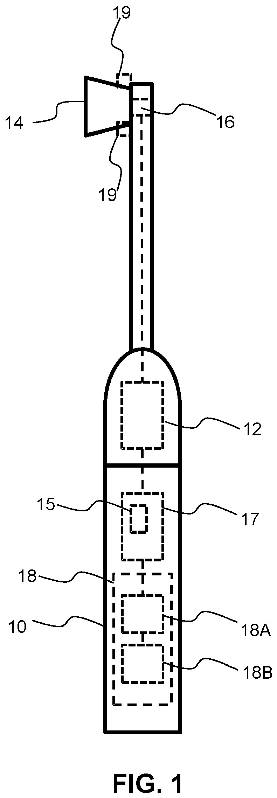

Referring to Figure 1, there is shown a simplified schematic block diagram of an electric toothbrush 10 according to a proposed embodiment. The electric toothbrush 10 comprises vibratory means 12 (specifically, a motor) that is adapted, in use, to vibrate a brush head 14 of the electric toothbrush 10 (with a frequency of about 200Hz). The vibratory means are controlled by a control unit 17 that operates according to a master clock signal (from a crystal oscillator 15 provided within the control unit 17).

The electric toothbrush 10 also comprises an image capture device 16 (e.g. digital camera) that is adapted, in use, to capture images of one or more oral features of a user. The image capture device 16 is also controlled by the control unit 17.

Thus, the control unit 17 may be considered as being a master control unit 17 (e.g. CPU) which controls operation of the electric toothbrush according to programmed instructions. The instructions are processed according to a master clock signal of the master control unit 17.

More specifically, the motor 12 is configured to cause the brush head 14 to repeatedly rotate clockwise then anti-clockwise by around 10°-25° from a rest position in a periodic manner. In this way, the brush head 14 vibrates with a periodic vibration waveform.

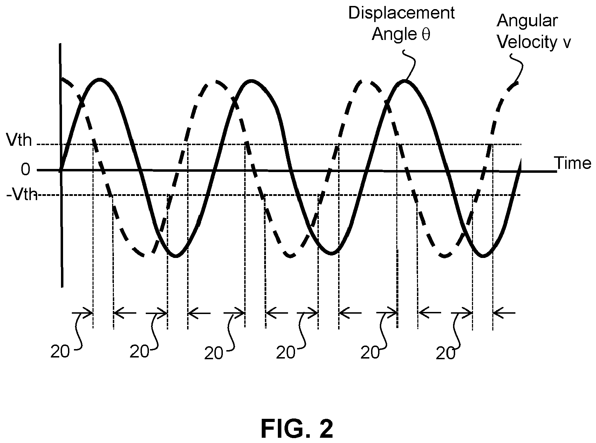

By way of further illustration, Figure 2 depicts a graph showing an exemplary variation in angle θ (of displacement) and angular velocity of the brush head 14 over time as the brush head 14 vibrates. The variation in displacement angle θ of the brush head 14 is depicted by the solid line, whereas the variation in angular velocity v of the brush head 14 is depicted by the dashed line.

It is seen from the variations depicted in Figure 2 that 'low speed' periods 20, i.e. time periods wherein the magnitude of angular velocity v of the brush head 14 is below a threshold value Vth, can be identified. More specifically, it is seen that, when the magnitude of the displacement angle θ reaches a maximum value, such that the gradient of displacement angle θ variation changes polarity (i.e. when the solid line changes direction), the angular velocity v of the brush head 14 is near-zero. It is proposed that these low speed periods 20 provide the most appropriate opportunities for image capture using an image capture device that may have limited speed and exposure tuning capabilities. Accordingly, embodiments are based on the concept(s) that the timing of data acquisition may be adapted according to the vibration cycle of the brush head 14. That is, embodiments propose to adapt image acquisition to the vibration of the personal care device, so as to provide images of improved quality.

Referring back to the embodiment of Figure 1, the electric toothbrush 10 comprises a system 18 for processing captured images. The system comprises a processor arrangement 18A that is configured to determine a timing of a target part of the vibration cycle based on the master clock signal of the master control unit 17. In some embodiments processors 17 and 18 may be combined into a single processor comprising the master clock 15. The system also comprises an image processor 18B that is configured to extract image data from captured images from the image capture device based on the determined timing of the target part of the vibration cycle and to generate a reconstruction image from the extracted image data.

Specifically, the processor arrangement 18A is adapted to determine the target part of the vibration cycle by reading the master clock signal to identify the timing of the vibration cycle of the brush head 14. Using the identified timings of the vibration cycle, the processor arrangement infers the timings of the low speed periods 20 in the vibration cycle.

The image processor 18B is then adapted to extract image data from captured images based on the determined timing of the target part of the vibration cycle. Specifically, in this example, the image processor 18B determines a relationship between a timing of captured images and the determined timing of the target part of the vibration cycle. Based on the determined relationship, the image processor 18B then identifies, for each captured image from the image capture device, a target region of the captured image captured during the target part of the vibration cycle and extracts image data from the identified target region. The system 18 is thus adapted to lock the image data acquisition onto target regions of capture images, wherein the target regions comprise image data captured during the low speed periods 20.

Accordingly, it is proposed that the master clock signal of the personal care device and the timing of captured images can be analyzed to determine a relationship that can be used to identify target locations of image data in captured images, such as locations in images that comprise image data captured during the low speed periods 20 of the vibration cycle.

To aid reduction in the exposure duration that is required to capture an adequately exposed image, the image capture device 16 of the embodiment of Figure 1 comprises illumination devices 19 (e.g. LEDs, LASERSs) that are configured, in use, to illuminate a part of the user's oral cavity. That is, where the sensitivity (e.g. ISO) and/or the lens aperture of the image capture device 16 may be fixed and/or limited, a reduction in the required length of exposure to capture an adequate amount of light may be obtained through illumination of the user's oral cavity by the illumination devices 19. Further, the control unit 17 of this exemplary embodiment is adapted to control the image capture device 16 to synchronize a timing of illumination by the illumination devices 19 with the vibration cycle. For instance, the illumination by the illumination devices 19 may be synchronized with the low speed periods 20 (identified by the system 18 for processing captured images). This may help to reduce or minimize power consumption whilst still ensuring suitable illumination to facilitate a reduced/shortened exposure duration of the image capture device 16 during the low speed periods. In other embodiments, however, the illumination devices 19 may be controlled to provide continuous illumination, e.g. illumination may be provided by the illumination devices 19 for the duration of the vibration cycle. In other embodiments, a continuous illumination may be applied.

Although the embodiment of Figure 1 has been described as employing a brush head 14 that repeatedly rotates clockwise then anti-clockwise by around 10°-25° from a rest position in a periodic manner, it will be appreciated that other embodiments may employ a brush head that vibrates in a different manner. For instance, alternative embodiments may comprise a brush head that shakes (left and right, or up and down) repeatedly, i.e. repeatedly displaces (laterally or vertically) in opposite directions from a rest position. Such embodiments will still exhibit a cyclical vibration pattern having variations in displacement and velocity over time that form periodic waveforms as depicted in Figure 2, and thus have repeating 'low speed' periods that are identifiable (e.g. according to the drive parameters and/or control of the vibratory means).

That is, although the proposed concept(s) have been described above with reference to rotating / angular motion of the vibrating part of the personal care device, the proposed concept(s) may be employed in other vibratory personal care devices exhibiting repetitive vibratory motion. Also, in case of multi-dimensional motion, periods of low/zero speed may be identified with respect to multiple dimensions and used to control one or more exposure parameters of the image capture device.

Also, although the embodiment of Figure 1 employs a concept of identifying periods of low or zero angular velocity based on the master clock signal, other parameters of the personal care device may also be monitored and analyzed to further refine/improve understanding of the vibration cycle (and thus facilitate improved identification of the target part of the vibration cycle). Examples of other parameters include: motor drive signal; magnetic field; device motion; and angular velocity of a part of the personal care device. Simple detection of an operation of the personal care device to aid or improve identification of a preferred, optimal or target timing of image capture may therefore be employed.

Simply by way of example, in a modified version of the embodiment of Figure 1, the personal care device may further comprise a movement sensor that is adapted to sense an angular velocity of a part of the personal care device. Such a sensor can be a gyroscope, compass or other angular sensing device. The system 18 for processing captured images is then adapted to determine the target part of the vibration cycle further based on a time period when then sensed angular velocity meets a predetermined velocity requirement. For instance, the predetermined velocity requirement may be that the magnitude of the sensed angular velocity does not exceed a velocity threshold value, thus identifying the low speed periods 20 of the vibration cycle by sensing an angular velocity of a part of the personal care device.

In another example, the personal care device may comprise a hall sensor that is adapted to sense a magnetic field at a part of the personal care device. The system 18 for processing captured images may then adapted to determine the target part of the vibration cycle further based on a time period when then sensed magnetic field meets a predetermined magnetic field requirement. Thus, an existing hall sensor that is already integrated within a conventional personal care device may be leveraged to provide new, improved and/or extended functionality.

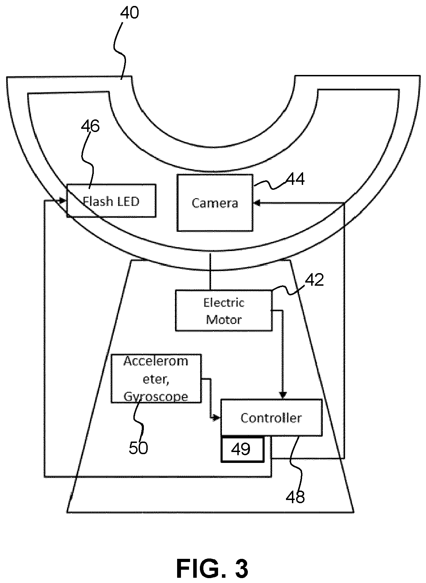

Referring to Figure 3, there is shown a simplified schematic block diagram of a mouthpiece 40 according to another embodiment. The mouthpiece 40 is adapted to be inserted into a user's mouth and vibrate (in use) for oral cleaning purposes.

The mouthpiece 40 comprises vibratory means 42 (specifically, an electric motor) that is adapted, in use, to cause the mouthpiece to vibrate with periodic vibration waveform (having a frequency in the range of 100Hz-500Hz).

The mouthpiece 40 also comprises an image capture device 44 positioned in the tray of the mouthpiece and adapted, in use, to capture images of one or more oral features of the user. A flash LED 46 is also provided in the tray of the mouthpiece for illuminating the oral cavity of the user, in use. The image capture device 44 and LED 46 are configured to be controlled by a control unit (i.e. controller) 48 of the mouthpiece.

Incorporated with the control unit 48 is a system 50 for processing captured images from the camera 44. The system 50 is configured to determine a timing of a target part of the vibration cycle based on the master clock signal 49 of the controller 48. The system 50 is configured to extract image data from captured images based on the determined timing of the target part of the vibration cycle, and to generate a reconstruction image from the extracted image data.

For assisting the system 50, the mouthpiece 40 also comprises a sensor arrangement 50 that is adapted to sense an operating parameter of the mouthpiece 40. Specifically, in this example, the sensor arrangement 50 comprises an accelerometer and gyroscope for detecting variations in displacement and velocity of the mouthpiece 40. Information about the detected variations in displacement and velocity of the mouthpiece 40 is provided to the system 50 and, further based on this information, the system 50 refines its determination of the target part of the vibration cycle of the mouthpiece 40.

As already explained above with reference to the embodiment of Figure 1, the system 50 for processing captured images determines a target part of the vibration cycle (e.g. a period of 'low speed/velocity' of the mouthpiece 40, i.e. time period wherein the magnitude of velocity of the mouthpiece 40 is below a predetermined threshold value). The system 50 control image data acquisition so that it is timed to occur during the target part of the vibration cycle (e.g. during identified periods of 'low speed/velocity' of the mouthpiece 40).

It is noted that, in this embodiment, the image capture device 44 comprises a rolling shutter camera configured to operate at an image capture frame rate. With respect to such a rolling shutter camera, trade-offs in operating characteristics may be required. For example, rolling shutter cameras may be more cost effective (e.g. cheaper) but may take longer for a full image capture depending on the acquisition settings and/or capabilities. A 'data acquisition period' is then considered to the time period for which data from the rolling shutter camera is acquired. For instance, image data from the rolling shutter camera 44 may be acquired for a quarter of a frame, thus resulting in the effective exposure duration being a quarter of the period of the rolling shutter camera frame.

For a rolling shutter camera, the shutter and capture are basically per line and thus a motion during the capture of all the lines in a captured image will distort the image. However, since an image captured by a rolling shutter camera frame will typically have a high number of lines/rows, a low speed rolling shutter camera will typically still have a fast line/row capturing time. It is proposed that such a line/row capture time will be fast enough to capture sharp, blur free image data during a period of low angular velocity in the vibration cycle. Embodiments therefore propose extracting image data from a target region of a captured image comprising image data captured during a target (e.g. low speed) period of the vibration cycle. Also, through determination of a relationship between the image capture frame rate and the frequency of the vibration cycle (which is, in turn, based on the master clock signal), the location of target regions in a series of captured images can be determined and 'locked on to' for data acquisition.

Thus, it will be appreciated that the rolling shutter camera can be free running and out of synchronization with vibration of the personal care device (and thus the image data capture frequency). A full image may then be reconstructed from image data acquired from target regions of multiple different frames of the rolling shutter camera.

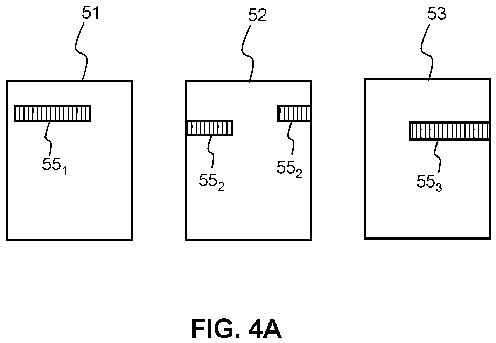

For example, Figure 4A provides an illustration of extracting image data from captured images according to proposed embodiment. The illustration shows first 51, second 52 and third 53 sequentially-captured images from the rolling shutter camera 44 of Figure 3 (i.e. first to third sequential frames from the rolling shutter camera).

As depicted in Figure 4A, for the first captured image 51, a first region 55₁ of the image 51 is captured during the low angular velocity period of the vibration cycle. Also, a second region 55₂ of the second captured image 52 is captured during another, subsequent low angular velocity period of the vibration cycle, and third second region 55₃ of the third captured image 53 captured during yet another, subsequent low angular velocity period of the vibration cycle. Because the frame rate of the rolling shutter camera differs from the vibration frequency of the personal care device, the first 55₁ second 55₂ and third 55₃ regions are in differing locations within the captured frames of rolling shutter camera. According to the proposed method, the image data of the first 55₁ second 55₂ and third 55₃ regions is extracted, since it was captured during a target, low velocity period of the vibration cycle.

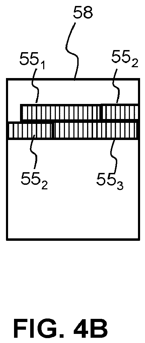

Then, as depicted in Figure 4B, the extracted image data from the first 55₁ second 55₂ and third 55₃ regions is used to construct an improved (e.g. high quality) image 58. Because the image 58 comprises image data of the first 55₁ second 55₂ and third 55₃ regions, all of which was captured by the rolling shutter camera during low velocity periods of the vibration cycle, the constructed image 58 comprises a greater amount of sharp, blur free image data than each of the first 51, second 52 and third 53 captured images.

In other embodiments, the first 55₁ second 55₂ and third 55₃ regions may comprise complete lines of the image or multiple lines of the image as would for example be the case for a rolling shutter camera which captures lines of an image at the same moment.

It will therefore be appreciated that embodiments may be configured to identify periods of low device velocity within the vibration cycle. Image data captured during these identified periods may then be extracted (on the inference that the contain image data of optimal quality) and used to construct a single, reconstructed image of improved image quality. That is, by identifying periods of low angular velocity in the vibration cycle of the personal care device, and accounting for a relationship between the timing of captured images and the frequency of vibration, embodiments may synchronize data extraction periods with the periods of low angular velocity.

Also, in some embodiments, it may be proposed to adjust the vibration frequency of the personal care device and/or the capture frequency of the image capture device based on the determined timing of the target part of the vibration cycle. For example, a target frequency may be determined based on a capture rate of the image capture device. The vibratory means may then be controlled to cause the personal care device to vibrate at the target frequency. In this way, embodiments may, for example, ensure that a first region of a first captured image from the image capture device captured during the low velocity period of the vibration cycle is different from a second region of a second, subsequent captured image from the image capture device captured during the target part of the vibration cycle. Overlapping regions, and thus superfluous repetition of extracted data may be avoided.

By way of yet further explanation, embodiments may be based on a realization that by reading the master clock signal, a relationship between the motor control signal (frequency) and the vibration cycle can be ascertained, which can then be used to identify a target period in the vibration cycle (during which the angular velocity of the vibrating part is low). By extracting image data captured during the target (i.e. low velocity) period across multiple vibration cycles, sharp, blur-free image data can be obtained and combined to construct a high quality (e.g. sharp and blur-free) image.

Where the image capture device capture rate (e.g. frame rate) and vibration cycle are not synchronized, the location of the sharp areas within different captured images will vary. A relationship between a timing of captured images and the determined timing of the target part of the vibration cycle may be identified, and this relationship may be leveraged to identify target regions of different captured images. Some embodiments may also be configured to control the vibration frequency to optimize the reconstruction speed, e.g. being adapting the locations of the sharp regions (i.e. target regions) across different captured images so that the sharp areas can be combined to cover an entire image frame in a minimum number of captured frame.

For instance, reconstruction time may be based on the number of sharp regions per captured image and thus have a direct relation to the image capture device motion, exposure time and capture speed. In an example, there may be 100 sharp lines per frame, where one frame consists of 640 lines. If the framerate of the image capture device is 30fps, a full image may be reconstructed from seven sequentially-captured images, resulting in a 7/30 second reconstruction time.

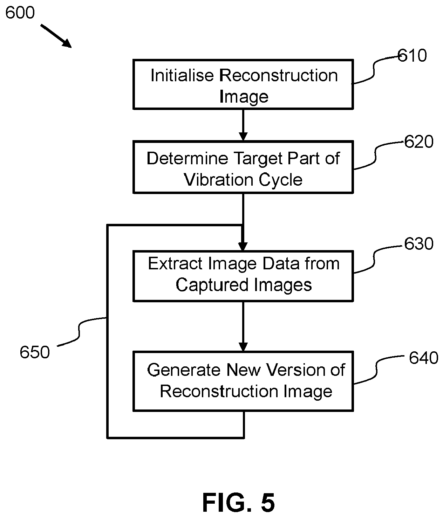

By way of example, referring now to Figure 5, there is depicted a flow diagram of a method 600 of processing captured images from a personal care device according to a proposed embodiment.

For this exemplary embodiment, the personal care device comprises a vibratory means adapted to vibrate the personal care device so that, in use, the personal care device vibrates with a vibration cycle having a vibration frequency based on a master clock signal of the personal care device. The personal care device also comprises an image capture device adapted, in use, to capture images of one or more oral features of a user.

The method 600 begins with the initialization 610 of a reconstruction image. For instance, the reconstruction image may be initialized with a first raw captured image from the image capture device (e.g. to enforce initial content and obtain one or more sharp image data regions).

Next, in step 620, a timing of a target part of the vibration cycle is determined based on the master clock signal. Specifically, using the master clock signal and the control signal provided to the vibratory means, it is determined where the 'still' (i.e. low velocity) moments are within the vibration cycle or the personal care device. This is based on the proposal that the timing of the control signal indicates the timing of the changing of direction of the vibratory means, and thus enables inference of the timing of the 'still' (i.e. low velocity) moments in the vibration cycle.

Then, using knowledge of the framerate and capture speed of the image capture device, image data is extracted from captured images in step 630, wherein the extract image data was captured during the 'still' (i.e. low velocity) moments in the vibration cycle. The image data for extraction can, for example, be determined accurately based on a timestamp of each captured image.

In step 640, a new version of the reconstruction image is generated using the extracted data. Specifically, the extracted data is inserted into the corresponding regions/locations of the reconstruction. In this way, data of the reconstruction image is replaced with sharp, blur-free image data captured during the 'still' (i.e. low velocity) moments in the vibration cycle, thus generating a new and improved version of the reconstruction image.

As indicated by the arrow labelled "650", the process of extracting 630 image data and generating 640 a new version of the reconstruction image can be repeated to generate new versions on the reconstruction image.

From the above description of various concepts and embodiments, it will be appreciated that there is proposed a method of processing captured images from a personal care device. Such a method may be employed in a processing system or computer, and such a system/computer may be integrated with a vibratory personal care device.

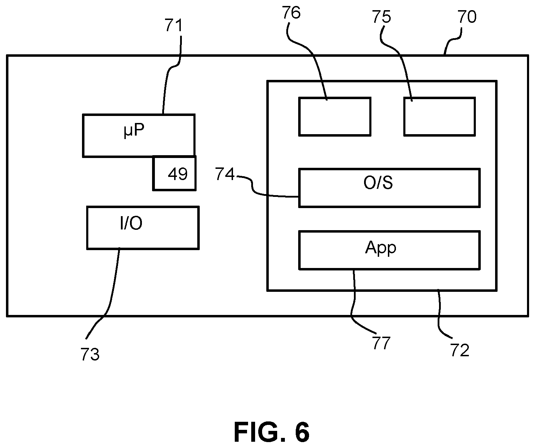

Figure 6 illustrates an example of a computer 70 within which one or more parts of an embodiment may be employed. Various operations discussed above may utilize the capabilities of the computer 70. For example, one or more parts of a system for providing a subject-specific user interface may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 70 includes, but is not limited to, PCs, workstations, laptops, PDAs, palm devices, servers, storages, and the like. Generally, in terms of hardware architecture, the computer 70 may include one or more processors 71, memory 72, and one or more I/O devices 73 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 71 is a hardware device for executing software that can be stored in the memory 72. The processor 71 can be virtually any custom made or commercially available processor, a central processing unit (CPU), a digital signal processor (DSP), or an auxiliary processor among several processors associated with the computer 70, and the processor 71 may be a semiconductor based microprocessor (in the form of a microchip) or a microprocessor. The processor 71 may be adapted to operate according to a master clock signal, e.g. a crystal oscillator circuit 49 feeding the processor 71)

The memory 72 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 72 may incorporate electronic, magnetic, optical, and/or other types of storage media. Note that the memory 72 can have a distributed architecture, where various components are situated remote from one another, but can be accessed by the processor 71.

The software in the memory 72 may include one or more separate programs, each of which comprises an ordered listing of executable instructions for implementing logical functions. The software in the memory 72 includes a suitable operating system (O/S) 74, compiler 76, source code 75, and one or more applications 77 in accordance with exemplary embodiments. As illustrated, the application 77 comprises numerous functional components for implementing the features and operations of the exemplary embodiments. The application 77 of the computer 70 may represent various applications, computational units, logic, functional units, processes, operations, virtual entities, and/or modules in accordance with exemplary embodiments, but the application 77 is not meant to be a limitation.

The operating system 74 controls the execution of other computer programs, and provides scheduling, input-output control, file and data management, memory management, and communication control and related services. It is contemplated by the inventors that the application 77 for implementing exemplary embodiments may be applicable on all commercially available operating systems.

Application 77 may be a source program, executable program (object code), script, or any other entity comprising a set of instructions to be performed. When a source program, then the program is usually translated via a compiler (such as the compiler 76), assembler, interpreter, or the like, which may or may not be included within the memory 72, so as to operate properly in connection with the O/S 74. Furthermore, the application 77 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 73 may include input devices such as, for example but not limited to, a mouse, keyboard, scanner, microphone, camera, etc. Furthermore, the I/O devices 73 may also include output devices, for example but not limited to a printer, display, etc. Finally, the I/O devices 73 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 73 also include components for communicating over various networks, such as the Internet or intranet.

If the computer 70 is a PC, workstation, intelligent device or the like, the software in the memory 72 may further include a basic input output system (BIOS) (omitted for simplicity). The BIOS is a set of essential software routines that initialize and test hardware at startup, start the O/S 74, and support the transfer of data among the hardware devices. The BIOS is stored in some type of read-only-memory, such as ROM, PROM, EPROM, EEPROM or the like, so that the BIOS can be executed when the computer 70 is activated.

When the computer 70 is in operation, the processor 71 is configured to execute software stored within the memory 72, to communicate data to and from the memory 72, and to generally control operations of the computer 70 pursuant to the software. The application 77 and the O/S 74 are read, in whole or in part, by the processor 71, perhaps buffered within the processor 71, and then executed.

When the application 77 is implemented in software it should be noted that the application 77 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 77 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed image capture and/or processing methods, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1 and 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method of processing captured images from a personal care device (10), wherein the personal care device comprises: an image capture device (16) adapted, in use, to capture images of one or more features of a user; and vibratory means (12) adapted to vibrate the personal care device so that, in use, the personal care device vibrates with a vibration cycle having a vibration frequency based on a master clock signal of the personal care device, and wherein the method comprises:
determining (620) a timing of a target part of the vibration cycle in relation to the master clock signal;
extracting (630) image data from captured images from the image capture device based on the determined timing of the target part of the vibration cycle; and
generating (640) a reconstruction image from the extracted image data.

2. The method of claim 1, wherein the personal care device (10) comprises an oral care device, and wherein the image capture device (16) is adapted, in use, to capture images of one or more oral features of a user.

3. The method of claim 2, wherein extracting (630) image data comprises:
determining a relationship between a timing of captured images and the determined timing of the target part of the vibration cycle; and
based on the determined relationship, for each captured image from the image capture device, identifying a target region of the captured image captured during the target part of the vibration cycle and extracting image data from the identified target region.

4. The method of claim 3, wherein identifying a target region of the captured image comprises predicting the target region based on the location of a target region in a preceding captured image and the determined relationship.

5. The method of any of claims 1 to 4, wherein the image capture device (16) comprises a camera,
and wherein the method comprises determining a timing of the captured images based on a frame capture rate of the camera.

6. The method of any of claims 1 to 5, further comprising:
adjusting at least one of the vibration frequency of the personal care device and the capture frequency of the image capture device based on the determined timing of the target part of the vibration cycle and the timing of captured images.

7. The method of claim 6, wherein adjusting at least one of the vibration frequency and the capture frequency of the image capture device comprises:
determining a target frequency based on the timing of captured images and the determined timing of the target part of the vibration cycle.

8. The method of claim 7, wherein determining the target frequency comprises identifying a vibration frequency or capture frequency such that a first region of a first captured image from the image capture device captured during the target part of the vibration cycle is different from a second region of a second, subsequent captured image from the image capture device captured during the target part of the vibration cycle.

9. The method of any of claims 1 to 8, further comprising:
determining an operating parameter of the personal care device,
and wherein determining the timing of the target part of the vibration cycle is further based on the determined operating parameter.

10. The method of claim 9, wherein the operating parameter comprises a drive signal of the vibratory means,
and wherein determining the timing of the target part of the vibration cycle comprises identifying a time period when then sensed drive signal meets a first predetermined requirement,
and preferably wherein: the sensed drive signal is representative of a drive current or voltage of the vibratory means; and the first predetermined requirement is that the magnitude of the drive current or voltage crosses a threshold value.

11. The method of any of claims 9 to 10, wherein the operating parameter comprises an angular velocity of a part of the personal care device,
and wherein determining the timing of the target part of the vibration cycle comprises identifying a time period when then sensed angular velocity meets a second predetermined requirement.

12. The method of any of claims 9 to 11, wherein the operating parameter comprises an acceleration or excursion of a vibration of a part of the personal care device,
and wherein determining the timing of the target part of the vibration cycle comprises identifying a time period when then the acceleration or excursion of the sensed vibration meets a third predetermined requirement, and preferably wherein the third predetermined requirement is that the acceleration or excursion of the sensed vibration exceeds a vibration threshold value.

13. A computer program comprising computer program code means which is adapted, when said computer program is run on a computer, to implement the method of any of claims 1 to 12.

14. A system (18) for processing captured images from a personal care device (10), wherein the personal care device comprises: an image capture device adapted, in use, to capture images of one or more features of a user; and vibratory means adapted to vibrate the personal care device so that, in use, the personal care device vibrates with a vibration cycle having a vibration frequency based on a master clock signal of the personal care device, and wherein the system comprises:
a processor arrangement (18A) configured to determine a timing of a target part of the vibration cycle based on the master clock signal; and
an image processor (18B) configured to extract image data from captured images from the image capture device based on the determined timing of the target part of the vibration cycle and to generate a reconstruction image from the extracted image data.

15. A personal care device (10) comprising:
an image capture device (16) adapted, in use, to capture images of one or more features of a user;
vibratory means (12) adapted to vibrate the personal care device so that, in use, the personal care device vibrates with a vibration cycle having a vibration frequency based on a master clock signal of the personal care device; and
a system (18) for processing captured images according to claim 14,
and preferably wherein the personal care device comprises a toothbrush.
